# EUROPEAN PATENT APPLICATION

(11) **EP 4 717 554 A1**
(43) Date of publication of application: **01.04.2026**
(21) Application number: 25203502.7
(22) Date of filing: 19.09.2025
(51) Int. Cl.: B61L 27/70, B61L 21/08, B61L 23/06, B61L 27/53

(54) **METHOD AND SYSTEM FOR TRANSFERRING PROTECTION**

(30) Priority: 27.09.2024 GB 202414198
(71) Applicant: Siemens Mobility Limited, London, NW1 2PL (GB)
(72) Inventor: Gordon, Stuart, Chippenham, SN15 1GG (GB); Page, Matthew, Chippenham, SN15 1GG (GB)
(74) Representative: Siemens Patent Attorneys

(57) **Abstract**

A method and system for securely transferring control of protection for a railway asset, from an operator of a rail control system to a trackside user is provided. The method includes steps of authenticating the trackside user, communicating, via a communication channel between the trackside user and operator, a token for applying the protection to the railway asset, validating the token at the rail control system, and applying the protection to the railway asset at the rail control system, in response to successfully validating the token.

## Description

### TECHNICAL FIELD

The present disclosure relates to railway safety and, in particular, a method for securely transferring control of protection between a trackside worker and a signaller applying a secondary layer of protection.

### BACKGROUND

Worker safety is of paramount importance to the rail industry due to the inherent risks associated with working on and around railway lines. Trackside workers face numerous hazards, including fast moving trains, high-voltage powerlines, live electrical systems, and risks from operating heavy machinery. These hazards may be compounded by challenging weather, noise, poor visibility and other environmental conditions.

In order to mitigate these dangers, a variety of safety procedures and systems are employed. This includes protection mechanisms which are designed to prevent trains from entering an area where trackside workers are operating. In an ideal world, trackside workers would always implement the safety procedures which provide the best protection. However, in many cases, the safety procedures and systems that provide the highest level of protection for trackside workers are more complex and time-consuming to implement.

For example, one system allows a trackside worker to isolate segments of tracks, by removing physical keys to provide a secondary layer of protection. The physical keys are hard coded into interlockings in the railway and removal of a key from a box prevents any train being signalled to pass through the defined protected area of track. Trains can only be signalled through the area again when the trackside worker returns the key and contacts the signaller.

Trackside workers can also call up the signaller and ask them to isolate a section of track to prevent trains from passing through that while they are working there. This simplified procedure provides a more efficient method for taking possession of a section of track, because a worker who is working on a small section may have to travel some distance to get to the right lockout box for their section of track. In contrast, they can call the signaller and have their section of track isolated instantly. This procedure is far less safe for the trackside worker compared to the lockout box system, because it only provides primary protection through procedure only. In particular, there is no mechanism to prevent the signaller from re-opening the section of track based on a misunderstood instruction, or an incorrect assumption that it is safe to re-open the section.

There is therefore a need for procedures for allowing trackside workers to take possession of railway assets efficiently, with a secondary layer of protection.

### SUMMARY

According to a first aspect, a method for securely transferring control of protection for a railway asset, from an operator of a rail control system to a trackside user is provided. The method comprises: authenticating the trackside user at a user terminal; communicating, via a communication channel between the trackside user and operator, a first token for applying the protection to the railway asset, from the user terminal to the rail control system, wherein the first token is accessible to the trackside user via the user terminal; validating the first token at the rail control system; and, applying the protection to the railway asset at the rail control system, in response to successfully validating the first token.

The method according to the first aspect, provides efficient application and removal of a track worker protection for a railway asset providing a secondary layer of protection, and without relying on physical protection infrastructure.

In a first implementation form the method comprises: communicating, via the communication channel, a second token, from the rail control system to the user terminal, once the protection is applied to the railway asset; and validating the second token at the user terminal.

**In** a second implementation form the method comprises communicating, via the communication channel, a third token for relinquishing control of the protection applied to the railway asset, from the user terminal to the rail control system, wherein the third token is accessible to the trackside user via the user terminal; validating the third token at the rail control system; and, assuming control of the protection at the rail control system, in response to successfully validating the third token.

**In** a third implementation form each token is generated using a cryptographically secure function.

**In** a fourth implementation form, the cryptographically secure function is a message authentication code.

**In** a fifth implementation form an input to the cryptographically secure function comprises data from a schedule of planned protection.

**In** a sixth implementation form the method comprises receiving a message from the trackside user, via the communication channel, the message indicating that the trackside user is unable to provide a token for relinquishing control of the protection to the rail control system; and over-riding the protection at the rail control system, in response to the message.

**In** a seventh implementation form, over-riding the protection comprises: generating, via a further user terminal independent of the rail control system, an over-ride token to over-ride the protection, communicating the over-ride token from the further user terminal to the rail control system, validating the over-ride token at the rail control system and, removing the protection at the rail control system, in response to successfully validating the over-ride token.

**In** an eighth implementation form the communicational channel is a voice communication channel.

**In** a ninth implementation form the rail control system operates in a physically isolated environment.

These and other aspects of the invention will be apparent from the embodiment(s) described below.

### BRIEF DESCRIPTION OF THE DRAWINGS

For a more complete understanding of the present disclosure, and the advantages thereof, reference is now made to the following descriptions taken in conjunction with the accompanying drawings, in which:
Figure I shows a schematic diagram of a system on which embodiments of the invention may be implemented.
Figure 2 is a flow diagram of a method for transferring control of protection for a railway asset, according to an example.
Figure 3 is a diagram showing the message flow of a protocol for transferring control of protection, according to an example.
Figure 4 is a diagram showing the message flow of a protocol for relinquishing control of protection, according to an example.
Figure 5 is a diagram showing the message flow of a protocol for over-riding control of protection, according to an example.
Figure 6 is a diagram showing the message flow of a protocol for generating tokens, according to an example.

### DETAILED DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

Figure I is a schematic diagram showing a system 100 on which embodiments of the invention may be implemented. The system 100 comprises a rail operating centre (ROC) 105. The ROC 105 is a physical building which houses personnel and systems. A variety of different functions are performed in the ROC 105 including monitoring of the rail network, safety management and control of rail infrastructure.

The ROC 105 comprises a rail control system 110. The rail control system 110 is an isolated system which is air-gapped or protected from external systems and networks. This enhances security and reduces the risk of unauthorised access or cyberattack. The rail control system 110 comprises a combination of hardware and software systems that enable operators to control signalling and manage train movements on the rail network from a single secure interface.

In Figure I an operator 115 interacts with the rail control system 110 through a user terminal 120. The user terminal 120 may include user input devices which allow the operator 115 to input information into the rail control system 110, and a display for displaying a user interface. The user interface may comprise a visual representation of railway assets on the rail network including signals, tracks, train locations and other relevant data.

In addition to signals operators such as the operator 115, further personnel may be present in the ROC 105, including a competent user 125. The competent user 125 is tasked with providing secondary protection in the ROC 105. The competent user 125 has access a separate user terminal in the rail control system 110 via a user terminal 130, isolated to the user terminal 120.

In Figure I a trackside user 135 represents a worker operating on the rail network. The trackside user 135 may be performing tasks such as trackside maintenance, inspection or obstacle removal. The trackside user 135 has access to a user terminal 140. The user terminal 140 may be any networked device such as a smartphone, tablet, laptop or other form of smart device. The user terminal 140 may comprise a display for displaying a user interface and communication interfaces for communicating data via one or more networks 145. Once authenticated, the trackside user 135 may use the user terminal 140 to access remote services, via the one or more networks 145. The remote services may provide access to stored data and applications.

The trackside user 135 communicates with the operator 115 via a communication channel 150. As the trackside user 135 is located outside the ROC 105, they do not have direct access to the rail control system 110. The communication channel 150 may be a voice communication channel which enables the trackside user 135 to speak directly with the operator 115 in the ROC 105. The voice communication channel may be provided via a landline, a cellular network, a VoIP, VoWiFl, a satellite communication channel or similar.

In the context of the present invention a protected area refers to a virtual boundary with an associated geographical boundary on the rail network. The virtual boundary comprises a set of virtual identities for rail infrastructure such as signals, which are used to prevent trains passing through the protected area. In the context of the present invention, protection refers to the systems, personnel and processes which are used to prevent trains passing through a protected area where trackside workers are operating. The control of protection is managed by the rail control system I 10, in conjunction with the trackside user 135 and operator 115.

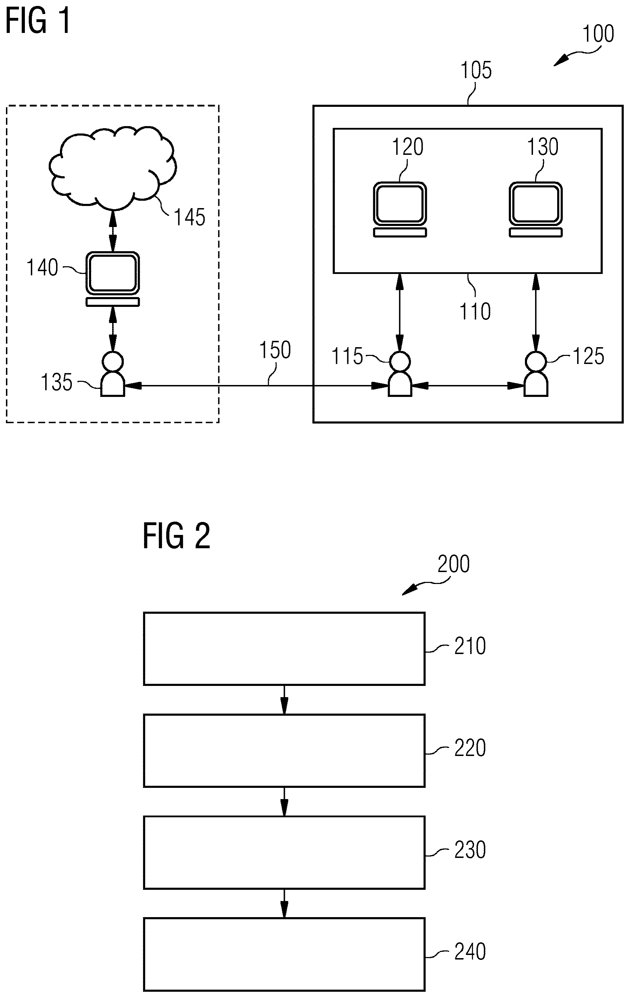

Figure 2 is a flow diagram of a method 200 for securely transferring control of protection for a railway asset, from an operator of a rail control system to a trackside user. The method 200 may be implemented on the system 100 in Figure 1. Herein a railway asset may refer to rail infrastructure or a collection of infrastructure elements. For example, a railway asset may comprise an individual section of track, a signal, a level crossing, multiple sections of track, a bridge, a tunnel, a power installation, a platform, a station, or similar.

The method 200 enables a trackside user to take control of protection for a railway asset, using verbally communicated secure tokens. The method 200 provides isolation for safety-related systems whilst offering the benefit of token exchanges in digital form rather than physically managed tokens connected through safety-critical interlocking systems. The method 200 allows trackside users to remotely secure protection without any direct communication between the rail control system 110 and an external connected system.

At block 210 the trackside user 135 is authenticated at the user terminal 140. In examples described herein, the trackside user 135 may authenticate themselves at the user terminal 140 through a web interface or an authentication application. Once the trackside user is authenticated, they are able to access a schedule of planned protection for a railway asset, and obtain the virtual tokens which are required to take control of the protection. In order to obtain tokens, the trackside user 135 may communicate a request to a remote service hosted on a secure server, and accessible via the network 145 through a secure web interface. The tokens may be generated at the server based on cryptographic keys. Keys may be pre-shared between the server and the rail control system 110. The server may compute tokens using a secure cryptographic function, such as a message authentication code, or hash-based message authentication code. Tokens may be communicated to the user terminal 140, via the network 145.

At block 220, the trackside user 135 sends a first token for applying the protection to the railway asset, from the user terminal 140 to the rail control system 110, via communication channel 150. In examples, when the communication channel 150 is a voice communication channel, the trackside user 135 verbally communicates the first token over the communication channel to the operator 115. The operator 115 manually enters the first token into their user terminal 120.

At block 230, the rail control system 110 validates the first token. In order to validate the first token, the rail control system 110 accesses the pre-shared cryptographic keys, the secure cryptographic function, and the relevant input data including data indicative of the planned protection for the railway asset. The first token is validated by recomputing the token based on the input data and keys, using the function. If the received token is valid then recomputing the token yields the same value. If the token is invalid then the operator 115 is notified. Otherwise, at block 240, in response to successfully validating the token the protection is applied to the railway asset at the rail control system 110.

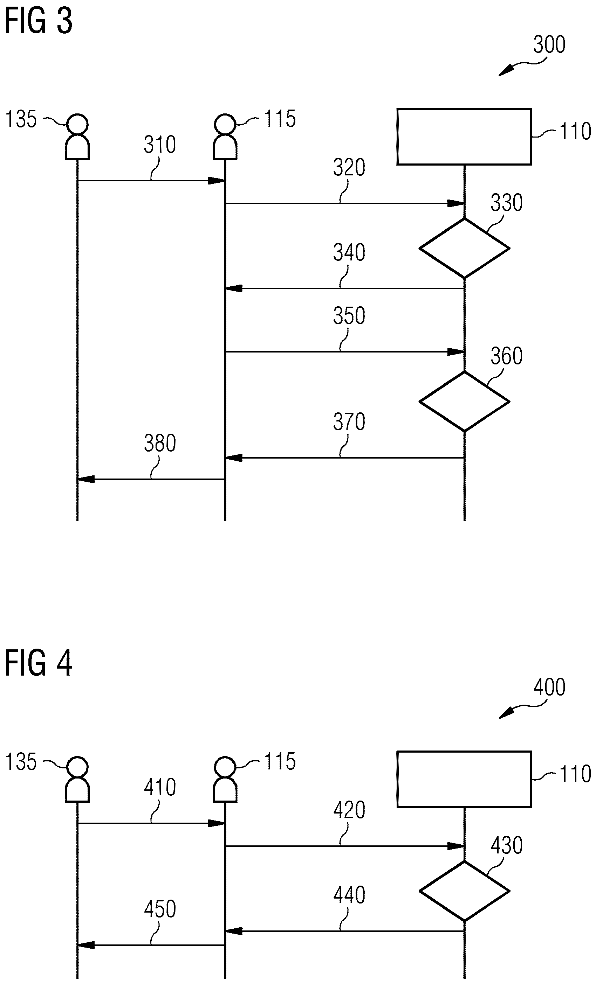

Figure 3 is a protocol diagram showing a message flow for transferring control of protection, according to an example. The protocol 300 represented in Figure 3 is executed between the trackside user 135, operator 115 and rail control system 110 from Figure 1. Initially, at step 310, the trackside user 135 requests protection for a railway asset, by sending the first token to the operator 115 via communication channel 150. At step 320, the operator 115 enters received token data for the first token into their terminal 120. At step 330, the rail control system 110 validates the first token. At step 340 the rail control system returns either a) a message confirming that the first token was validated to the operator 115, or b) a message confirming that the token is invalid. If the token is valid, at step 350, the operator 115 requests protection for the railway asset.

At step 360, the rail control system 110 attempts to apply the protection to the railway asset. If the protection is applied successfully, then, at step 370, the rail control system 110 returns a second token to the operator 115. The second token may be generated in a similar manner to the first token, based on a pre-shared cryptographic key. If the protection has not been applied successfully the rail control system 110 may return an error message to the operator 115. At step 380 the operator 115 communicates the second token to the trackside user 135 via the communication channel 150. The trackside user 135 may validate the received second token to confirm that protection has been applied successfully. Once the protection is applied, the operator 115 is unable to remove the protection until a further unlocking token is supplied by the trackside user 135.

Figure 4 is a protocol diagram 400 showing a message flow for relinquishing control of protection applied to a railway asset, from the trackside user 135 to the operator 115. At step 410, the trackside user 135 communicates a third token for relinquishing control of the protection applied to the railway asset, via the communication channel, to the operator 115. The third token may be generated in a similar manner to the first and second tokens, based on a pre-shared cryptographic key.

At step 420, the operator 115 enters received token data for the third token into their terminal 120. At step 430, the rail control system 110 validates the third token, and, if the token is successfully validated, removes the protection applied to the railway asset. At step 440, the rail control system 110 communicates a message to the operator 115. The message either a) confirms that protection is relieved or b) confirms that the token is invalid. In the latter case, control of protection remains with the trackside user 135 until a valid token is produced. If the protection has been relieved then, at step 450, the operator 115 communicates a message, via communication channel 150, to the trackside user 135, that the protection is relived.

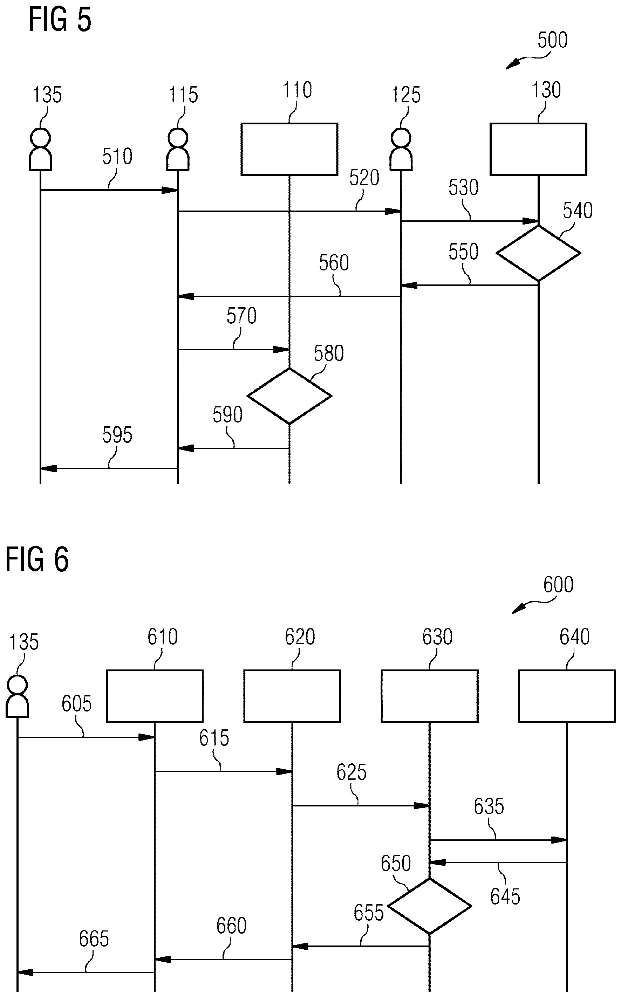

Figure 5 is a protocol diagram 500 showing a message flow for overriding protection applied to a railway asset, to return control from the trackside user 135 to the operator 115. At step 510, the trackside user 135 communicates a message, via the communication channel 150, to the operator 115, that they are unable to provide a token to relinquish control of protection applied to a railway asset. At step 520, the operator 115 communicates with competent user 125 request over-ride of the protection. At step 530, the competent user 125 communicates a request for a token to the rail control system I 10, via their terminal 130. In response, at step 540, the rail control system generates an override token using a pre-shared secret key. At step 550, the over-ride token is returned to the competent user 125.

At step 560, the competent user 125 communicates the over-ride token to the operator 115. This may be performed in person or a communication channel such as 105 (telephone call) as both the operator 115 and competent user 125 are located in the ROC 105. At step 570, the operator 115 enters received token data for the override token into their terminal 120. At step 580, the rail control system 110 validates the override token, and, if the override token is successfully validated, removes the protection applied to the railway asset. At step 590, the rail control system 110 communicates a message to the operator 115. The message either a) confirms that protection is relieved or b) confirms that the override token is invalid. At step 595, when the protection has been relieved, the operator 115 may inform the trackside user 135 that control of protection has been returned to the operator 115.

Figure 6 is a protocol diagram 600 showing a message flow for obtaining tokens, according to an example. The protocol shown in Figure 6, may be executed between the trackside user 135, and a secure server, accessible to an authenticated user through the user terminal 140 via the one or more networks 145.

At step 605 the trackside user 135 communicates a request for a token at a secure web interface 610, through the user terminal 145. At step 615, the web interface communicates a request to a remote API gateway 620, implemented at a secure server. At step 625, the remote API gateway 620 communicates an invoke function request to a secure cloud environment 630 for generating a token. According to examples, the token may be generated using a secure cryptographic function. The secure cloud environment 630 implements cybersecurity policies, best practices and controls to ensure that computation and storage of tokens is secure. At step 635, the secure cloud environment 630 requests a pre-shared secret key from secure key storage 640. At step 640, the secret key is obtained from secure key storage 640. At step 650, the secure cloud environment 630 computes a token on the basis of the request, and secret key. At step 655, the secure cloud environment 630 returns the generated token to the API gateway 620. At step 660, the API gateway responds to the request from step 615, with the token. At step 665, the token is communicated to the trackside user 135 via the web interface.

The present disclosure is described with reference to flow charts and/or block diagrams of the method, devices and systems according to examples of the present disclosure. Although the flow diagrams described above show a specific order of execution, the order of execution may differ from that which is depicted. Blocks described in relation to one flow chart may be combined with those of another flow chart. In some examples, some blocks of the flow diagrams may not be necessary and/or additional blocks may be added.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

## Claims

1. A method for securely transferring control of protection for a railway asset, from an operator of a rail control system to a trackside user, the method comprising:
authenticating the trackside user at a user terminal;
communicating, via a communication channel between the trackside user and operator, a first token for applying the protection to the railway asset, from the user terminal to the rail control system, wherein the first token is accessible to the trackside user via the user terminal;
validating the first token at the rail control system; and,
applying the protection to the railway asset at the rail control system, in response to successfully validating the first token.

2. The method of claim 1, further comprising:
communicating, via the communication channel, a second token, from the rail control system to the user terminal, once the protection is applied to the railway asset; and
validating the second token at the user terminal.

3. The method of claim 2, further comprising:
communicating, via the communication channel, a third token for relinquishing control of the protection applied to the railway asset, from the user terminal to the rail control system, wherein the third token is accessible to the trackside user via the user terminal;
validating the third token at the rail control system; and,
removing the protection at the rail control system, in response to successfully validating the third token.

4. The method of claim 1 to 3, wherein each token is generated using a cryptographically secure function.

5. The method of claim 4, wherein the cryptographically secure function is a message authentication code.

6. The method of claim 4, wherein an input to the cryptographically secure function comprises data from a schedule of planned protection.

7. The method of claim 2, comprising:
receiving a message from the trackside user, via the communication channel, the message indicating that the trackside user is unable to provide a token for relinquishing control of the protection to the rail control system; and
over-riding the protection at the rail control system, in response to the message.

8. The method of claim 7, wherein over-riding the protection comprises:
generating, via a further user terminal independent of the rail control system, an over-ride token to over-ride the protection;
communicating the over-ride token from the further user terminal to the rail control system;
validating the over-ride token at the rail control system; and,
removing the protection at the rail control system, in response to successfully validating the over-ride token.

9. The method of claims 1 to 8, wherein the communicational channel is a voice communication channel.

10. The method of any one of claims 1 to 9, wherein the rail control system operates in a physically isolated environment.

11. A rail control system for controlling protection applied to a railway asset, the rail control system comprising:
a subsystem for controlling protection applied to a railway asset; and
a user terminal comprising
a display; and
a user input device;
wherein, in response to receiving an input via the user input device, at the user terminal, the input comprising token data for a first token for applying the protection to the railway asset, the rail control system is configured to:
validate the first token; and,
apply the protection to the railway asset at the rail control system, in response to successfully validating the first token.

12. The rail control system of claim 11, wherein the first token comprises data received via a communication channel between an operator of the user terminal and a trackside user.

13. The rail control system of claim 11, comprising:
generating a second token in response to successfully applying the protection to the railway asset; and
displaying the second token to an operator, in the display of the user terminal.

14. The rail control system of claim 11, wherein, in response to receiving a further input via the user input device, at the user terminal, the further input comprising a third token for relinquishing control of the protection applied to the railway asset, the rail control system is configured to:
validate the third token; and,
remove the protection at the rail control system, in response to successfully validating the third token

15. The rail control system of claim 11, wherein the communicational channel is a voice communication channel.

16. The rail control system of claim 11, wherein the rail control system operates in a physically isolated environment.
